# EUROPÄISCHE PATENTSCHRIFT

(11) **EP 0 741 220 B1**
(45) Veröffentlichungstag und Bekanntmachung des Hinweises auf die Patenterteilung: **31.03.2004**
(21) Anmeldenummer: 96102805.7
(22) Anmeldetag: 24.02.1996
(51) Int. Cl.: E05B 49/00, B60R 25/04

(54) **Elektronischer Fahrzeugschlüssel**
Electronic key for vehicle
Clé électronique pour véhicule

(30) Priorität: 10.04.1995 DE 19513498
(43) Veröffentlichungstag der Anmeldung: 06.11.1996
(73) Patentinhaber: DaimlerChrysler AG, 70567 Stuttgart (DE)
(72) Erfinder: Nagel, Gerhard, 71154 Nufringen (DE); Setzer, Jürgen, 75428 Illingen (DE); Wilhelmi, Volker, 73733 Esslingen (DE)

(56) Entgegenhaltungen:
- EP-A- 0 366 378
- EP-A- 0 617 183
- US-A- 4 663 626
- US-A- 4 940 964
- PATENT ABSTRACTS OF JAPAN vol. 016, no. 541 (M-1336), 11. November 1992 (1992-11-11) & JP 04 202985 A (TATSUO YONEDE), 23. Juli 1992 (1992-07-23)

## Beschreibung

Die Erfindung bezieht sich auf einen elektronischen Fahrzeugschlüssel. Die Ausstattung von Fahrzeugschlüsseln mit elektronischen Komponenten dient herkömmlicherweise häufig dazu, eine Türschließanlage und/oder eine Wegfahrsperre des Fahrzeugs über den Schlüssel mittels drahtloser Kommunikation, z.B. über eine Infrarot-Datenübertragungsstrecke, anzusteuern. Zusätzlich ist oftmals ein Schlüsselbart zum mechanischen Ver- und Entriegeln der im Fahrzeug vorhandenen Schlösser in den Schlüssel integriert.

Bei modernen Schließanlagen und Wegfahrsperreinrichtungen von Kraftfahrzeugen erfolgt ein codegeschützter Datenaustausch zwischen elektronischem Schlüssel und Fahrzeug zur Prüfung der Zugangs- bzw. Nutzungsberechtigung für das Fahrzeug. Bei einem derartigen, in der Offenlegungsschrift DE 39 00 494 A1 offenbarten System umfaßt die bidirektionale Datenkommunikation zwischen Schlüssel und Fahrzeug zusätzlich zu einem Codesignal für die Ansteuerung einer Diebstahlschutzeinrichtung fahrzeug- und/oder benutzerspezifische Daten, die vom Fahrzeug gesendet und im Schlüssel abgespeichert sowie von dort wieder abgerufen und zum Fahrzeug zwecks fahrzeug- und/oder benutzerspezifischer Einstellung von Bedienelementen übertragen werden können.

Aus der Offenlegungsschrift DE 34 06 746 A1 ist es bekannt, einen elektronischen Fahrzeugschlüssel, der für codierte Datenübertragung zwecks Schließanlagenansteuerung mit Zugangsberechtigungsprüfung eingerichtet ist, mit einer Mikroprozessor-Steuereinheit und einem Tongenerator auszustatten, wobei letzterer dazu dient, durch Abgabe eines Signaltons den Erhalt einer Quittierungsinformation hinsichtlich einer Übereinstimmung bei der Prüfung eines gesendeten Benutzercodesignals akustisch anzuzeigen.

In der Offenlegungsschrift DE 41 02 020 A1 wird ein Fahrzeugschlüssel beschrieben, der für bidirektionalen Informationsaustausch mit dem Fahrzeug zwecks Ansteuerung von Verriegelungsund Entriegelungsorganen des Fahrzeugs eingerichtet ist und außerdem eine optische Anzeigeeinheit aufweist, auf der vom Fahrzeug übertragene Informationen bezüglich Fahrzustandsparameter, wie Zustand der Fahrzeugtüren, gefahrene Kilometerstrecke, Füllstand im Kraftstofftank, und gegebenenfalls weiterer Parameter, wie Uhrzeit und Zustand der Batterie des Schlüssels, optisch angezeigt werden können.

Aus der EP 366 378 A2 ist eine Fahrzeug-Diebstahlsicherungseinrichtung mit einem Diebstahldetektor und einer Telefonanlage bekannt. Bei Detektion eines Diebstahlversuches wird automatisch mittels der Telefonanlage eine vorgegebene Telefonnummer des Fahrzeugbesitzers gewählt, um ihn von dem Diebstahlversuch zu informieren. Ferner ist im Fahrzeug ein Mikrofon vorgesehen, mit dem die durch den Diebstahlversuch erzeugten Geräusche zum Fahrzeugbesitzer übertragen werden.

Aus der Offenlegungsschrift EP 0 617 183 A2 ist ein Schlüssel für ein Kraftfahrzeug bekannt, der einen Sprachspeicher, ein Mikrofon und eine Sprachwiedergabeeinheit enthält. In den so ausgelegten Schlüssel können Informationen, wie beispielsweise die Nummer eines Parkplatzes, auf dem sich das Fahrzeug befindet, in Sprachform eingegeben und dort abgespeichert werden, wonach diese Informationen auf Anforderung durch den Benutzer wieder aus dem Schlüssel in Sprachform ausgegeben werden können.

In der US 4,940,964 A wird ein Fahrzeugsteuersystem beschrieben, das eine fahrzeugseitig installierte Steuereinheit und eine tragbare Fernsteuereinheit umfasst, zwischen denen eine bidirektionale Datenkommunikationsstrecke besteht. Mit der Fernsteuereinheit lassen sich Fahrzeugfunktionen steuern, insbesondere Türschließsysteme. Umgekehrt können Fahrzeugzustandsdaten auf die Fernsteuereinheit übertragen und dort angezeigt werden. Insbesondere enthält diese Fernsteuereinheit eine Sprachausgabeeinheit zur Ausgabe der drahtlos übermittelten Fahrzeugzustandsdaten.

Bei einer in der Offenlegungsschrift DE 37 02 331 A1 vorgesehenen Sicherungseinrichtung für Türen, Tore und dgl. ist ein elektromechanisches Schloß vorgesehen, mit dem eine Tastatur und eine Steuereinrichtung verbunden sind. Über die Tastatur kann ein Nummerncode eingegeben werden, wobei das Schloß öffnet, wenn der eingegebene Code mit einem in der Steuereinrichtung gespeicherten Code übereinstimmt. Bei unbefugtem Öffnen des Schlosses wird ein Alarmsignal abgegeben, und die Steuereinrichtung wählt eine gespeicherte Telefonnummer an und sendet eine gespeicherte Nachricht aus, wozu sie eine Wähleinrichtung für Fernsprechnetze und eine Textspeichereinrichtung aufweist. Auf diese Weise kann der Angerufene über das unbefugte Öffnen des Schlosses informiert werden.

Aus der Patentschrift DE 39 12 707 Cl ist eine Vorrichtung mit einem in einem Fahrzeug fest angeordneten Empfänger bekannt, mit dem von einem stationären Objekt drahtlos übertragene Signale empfangen werden können, wobei dem Empfänger ein Detektor nachgeschaltet ist, an den ein in oder am Fahrzeug angeordnetes Organ, beispielsweise ein elektromagnetisch betätigbarer Riegel für die rückwärtige Tür des Fahrzeugs, angeschlossen ist. Die von dem Objekt ausgehenden Signale, z.B. Funksignale, enthalten eine Information über eine ortsgebundene Bestimmungsposition, wobei nach Empfang der Signale im Fahrzeug das dort angeordnete Organ betätigt und auf diese Weise ein bestimmungspositionsbezogener Steuervorgang ausgelöst wird.

Der Erfindung liegt als technisches Problem die Bereitstellung eines elektronischen Fahrzeugschlüssels zugrunde, der neben seiner Fahrzeugzugangs- bzw. Fahrzeugnutzungsberechtigungsfunktion erweiterte Kommunikationsmöglichkeiten bietet, einschließlich der Fähigkeit, über eine drahtlose Kommunikationsstrecke empfangene Informationen ausgeben zu können.

Dieses Problem wird durch einen Fahrzeugschlüssel mit den Merkmalen des Anspruchs 1 gelöst.

Ein Fahrzeugschlüssel mit den Merkmalen des Anspruchs 3 bietet erweiterte Kommunikationsmöglichkeiten durch seine Fähigkeit zum Empfang von Funkrufen, wobei die empfangene Funkrufinformation über eine entsprechende Ausgabeeinheit gesteuert von einer passend eingerichteten Steuereinheit vom Schlüssel wieder ausgegeben werden kann. Derartige Funkrufe werden über bekannte Telekommunikations-Endgeräte, wie Telefon, Telex, Teletex oder Bildschirmtext, an einen durch eine Funkrufnummer adressierbaren Empfänger geschickt, der momentan nicht über ein solches Telekommunikations-Endgerät, erreichbar ist. Die Funkrufinformation kann beispielsweise eine Rückrufnummer enthalten, über welche die den Funkruf empfangende Person dann die den Funkruf sendende Person über das normale Telekommunikationsnetz zurückrufen kann. Dabei gibt es sogenannte Nur-Ton-Funkrufempfänger mit bis zu vier Funkrufnummern sowie Numerik-Funkrufempfänger mit einer Funkrufnummer für Numerik und bis zu zwei Nummern für Nur-Ton-Information. Für einen Fahrzeugschlüssel geeignete miniaturisierte Funkrufempfängereinheiten sind bekannt und werden bislang beispielsweise als Zusatzfunktion in Armbanduhren integriert.

Bei einer Weiterbildung der Erfindung nach Anspruch 2 ist die Funkrufempfangsfunktion mit einer Sprachsystemfunktion kombiniert, mit dem Vorteil, daß der Empfang einer Funkrufnachricht durch einen Signalton angezeigt und/oder eine gegebenenfalls in der Funkrufnachricht enthaltene Rückrufnummer in Sprachform aus dem Schlüssel abgerufen werden kann.

Eine Weiterbildung der Erfindung nach Anspruch 3 ermöglicht es, vom Schlüssel empfangene Funkrufinformationen an das zum Schlüssel gehörige Fahrzeug über eine drahtlose Datenkommunikationsstrecke zu übermitteln, die insbesondere gleichzeitig als Kommunikationsstrecke eines Fahrzeugzugangsberechtigungssystems oder eines Fahrzeugnutzungsberechtigungssystems dienen kann, bei denen die Ansteuerung einer Schließanlage und/oder einer Wegfahrsperre des Fahrzeugs durch verschlüsselten Datenaustausch zwischen Schlüssel und Fahrzeug über diese Kommunikationsstrecke, z.B. eine Infrarot-Kommunikationsstrecke, stattfindet. Die Funkrufinformation kann dann an einer Anzeigeeinrichtung im Fahrzeug angezeigt oder, im Fall einer Rückrufnummerinformation, auch direkt einem im Fahrzeug vorhandenen Funktelefon übermittelt werden.

Eine Weiterbildung der Erfindung nach Anspruch 4 stellt einen erhöhten Schutz vor unberechtigter Fahrzeugfremdnutzung zur Verfügung. Ein derartiger Schlüssel ist für moderne Fremdnutzungsschutzsysteme verwendbar, bei denen eine Wegfahrsperre aktiviert wird, falls eine zugehörige fahrzeugseitige Einheit keine Nutzungsfreigabedaten mehr empfängt, die ansonsten in regelmäßigen Intervallen vom Schlüssel zum Fahrzeug übertragen werden. Das Fahrzeug kann folglich nicht ohne den Besitz des Schlüssels benutzt werden. Als weitere Sicherungsmaßnahme ist nun die Abgabe der Freigabedaten durch den Schlüssel an den regelmäßigen Empfang nutzungsfreigebender Funkrufinformationen in gewissen festgelegten Zeitintervallen gekoppelt. Bei Verlust des Fahrzeugschlüssels durch den Berechtigten kann er für eine Beendigung dieser die Fahrzeugbenutzung aufrechterhaltenden Funkrufnachrichten an den Schlüssel sorgen, wonach der Schlüssel keine Nutzungsfreigabedaten mehr an das Fahrzeug sendet, wodurch die Wegfahrsperre aktiviert wird. Ein Unberechtigter kann damit das Fahrzeug auch durch zusätzlichen Besitz des Schlüssels nicht weiter nutzen.

Eine Weiterbildung der Erfindung nach Anspruch 5 ist für Fahrzeuge vorteilhaft, die über eine Einbruch-Diebstahl-Warnanlage verfügen. Diese herkömmlichen Warnanlagen geben zwar ein Alarmsignal am Ort des Fahrzeugs ab, dieses wird jedoch möglicherweise nicht wahrgenommen oder beachtet. Indem vom Funktelefon des Fahrzeugs selbsttätig bei Aktivierung der Einbruch-Diebstahl-Warnanlage eine entsprechende Aktivierungsmeldung als Funkruf abgesendet wird, der vom Schlüssel empfangen werden kann, vermag letzterer eine Warnmeldung an den Schlüsselbesitzer abzugeben, der dann geeignete Maßnahmen ergreifen kann.

Bevorzugte Ausführungsformen der Erfindung sind in den Zeichnungen dargestellt und werden nachfolgend beschrieben. Hierbei zeigen:
- Fig. 1: zwei Seitenansichten eines elektronischen Fahrzeugschlüssels mit Sprachsystemfunktion,
- Fig. 2: eine schematische Ansicht eines bidirektionalen drahtlosen Datenkommunikationssystems zwischen einer fahrzeugseitigen elektronischen Zündstartschaltereinheit und einem zum Fahrzeug gehörigen Schlüssel mit Sprachsystemfunktion,
- Fig. 3: ein Blockschaltbild der Elektronik eines elektronischen Fahrzeugschlüssels mit Infrarot-Kommunikationsfunktion, Funkrufempfangsfunktion und Sprachsystemfunktion,
- Fig. 4: eine schematische Darstellung der Funkruf-Kommunikation zwischen einem Fahrzeug und einem zugehörigen elektronischen Schlüssel zur Meldung der Aktivierung einer Einbruch-Diebstahl-Warnanlage und
- Fig. 5: eine schematische Darstellung eines Funkruf-Kommunikationssystems zwischen einem Fahrzeug, einem zugehörigen elektronischen Fahrzeugschlüssel und dem Benutzer zur Steuerung einer Fremdnutzungsschutzeinrichtung.

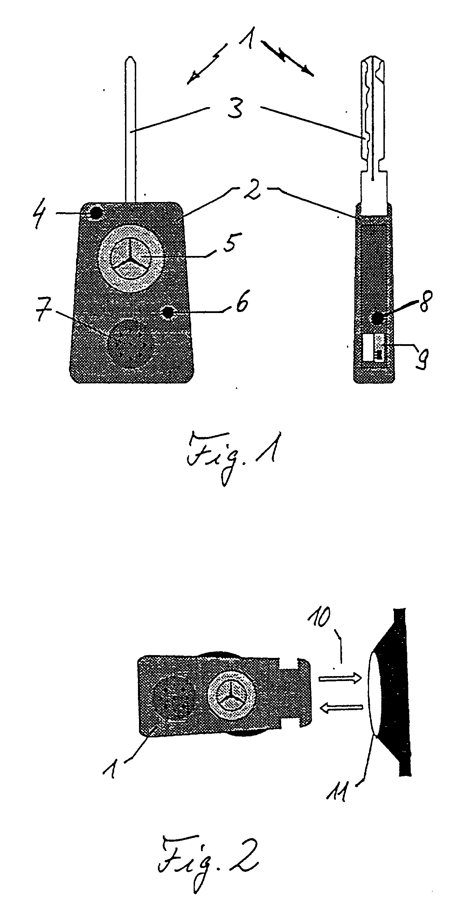

In den Figuren sind verschiedene Anwendungen eines mit unterschiedlichen Kommunikationseinrichtungen ausgerüsteten elektronischen Fahrzeugschlüssels (1) illustriert, wobei der genaue elektronische Aufbau im Schlüssel (1) entsprechend der zur erfüllenden Funktionen modifiziert sein kann, jedoch der Einfachheit halber stets dasselbe Bezugszeichen für den Schlüssel (1) verwendet ist. Der in Fig. 1 gezeigte Schlüssel (1) besitzt ein Gehäuse (2) üblicher Art, von dem ein Schlüsselbart (3) zur mechanischen Betätigung von Türschlössern des zugehörigen Fahrzeugs über eine entsprechende Entriegelungstaste (4) herausgeklappt bzw. wieder zurückgeklappt werden kann. Zugleich bietet der Schlüssel (1) über eine Infrarot-Fernbedienungstaste (5) die Möglichkeit einer benutzercodegesicherten Ansteuerung der Fahrzeugschließanlage über eine bidirektionale Infrarot-Datenübertragungsstrecke. Darüber hinaus besitzt der Schlüssel (1) eine Sprachsystemfunktion mit Sprachausgabe- und Spracheingabemöglichkeit. Die Sprachsystemfunktion wird über entsprechende Auslösetasten (6) aktiviert. Zur Sprachausgabe dient ein Lautsprecher (7), und über ein eingebautes Mikrophon (8) kann Sprachinformation in den Schlüssel (1) eingegeben werden. Über eine entsprechende Umschaltung (9) kann zwischen Sprachausgabe und Spracheingabe umgeschaltet werden.

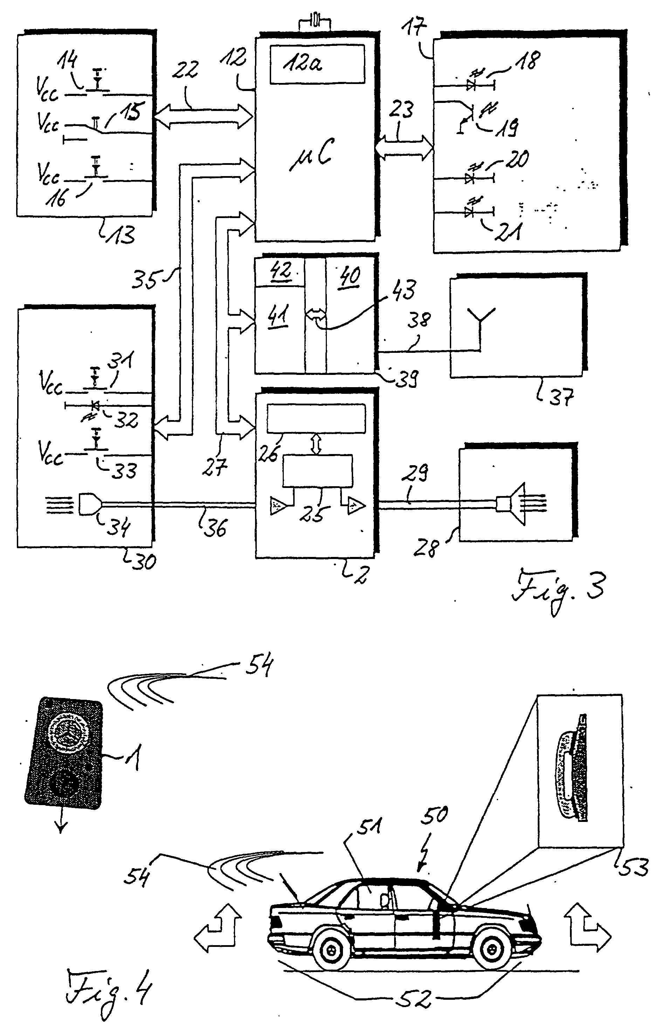

In Fig. 2 ist die Kommunikation eines zu demjenigen von Fig. 1 äquivalenten elektronischen Fahrzeugschlüssels (1) mit dem Fahrzeug über eine bidirektionale Infrarot-Datenübertragungsstrecke (10) veranschaulicht. Der fahrzeugseitige Kommunikationsteil ist in einer schematisch dargestellten elektronischen Zündstartschaltereinheit (11) integriert.

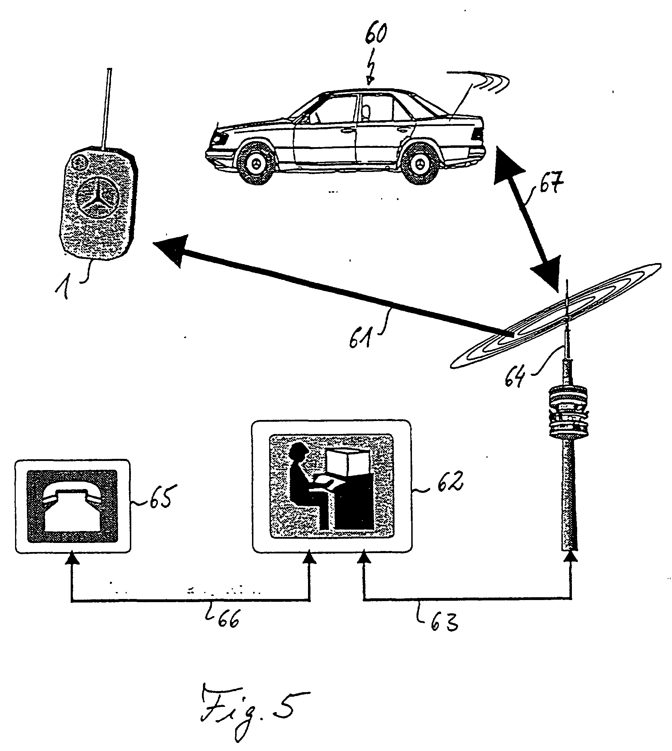

In Fig. 3 ist die Elektronik eines Schlüssels der in den Fig. 1 und 2 gezeigten Art dargestellt, wobei dieser Schlüssel neben der Sprachsystemfunktion und der Infrarot(IR)-Kommunikationsmöglichkeit mit dem zugehörigen Fahrzeug zusätzlich eine Funkrufempfangsfunktion besitzt. Zur Steuerung dieser Funktionen dient ein Mikrocontroller (12) mit integriertem EEPROM (12a). Für die IR-Kommunikationsfunktion sind eine Infrarot-Fernbedienungseinheit (13) und eine IR-Kommunikations- und Anzeigeeinheit (17) vorgesehen, die über jeweilige bidirektionale Signal- bzw. Datenaustauschleitungen (22, 23) mit dem Mikrocontroller (12) verbunden sind. Die IR-Fernbedienungseinheit beinhaltet einen IR-Fernbedienungsauslöseschalter (14), einen Betriebsartumschalter (15) und einen Schalter (16) für die Ansteuerung einer zusätzlichen Heckdeckelsicherung. Die IR-Kommunikations- und Anzeigeeinheit (17) enthält einen IR-Sender (18), einen IR-Empfänger (19) sowie zwei Leuchtdiodenanzeigen (20, 21) über eine erfolgte Fahrzeugzustandsrückmeldung und über den Zustand einer stromversorgenden Batterie. Über die bidirektionale Infrarotschnittstelle findet in einer der herkömmlichen, hier nicht weiter zu beschreibenden Arten ein verschlüsselter Datenaustausch zur manipulationsgeschützten Prüfung der Fahrzeugzugangsberechtigung statt, wobei nur bei positivem Prüfergebnis die zuvor verriegelten Fahrzeugtüren entriegelt werden. Des weiteren ist dieses IR-Kommunikationssystem zwischen Schlüssel und Fahrzeug zur Übertragung von aktuellen fahrzeug-spezifischen Daten, wie Tankfüllstand, Kilometerstand etc. eingerichtet. Die jeweils aktuell in den Fahrzeugschlüssel geladenen Daten können vom Benutzer bei Bedarf insbesondere auch außerhalb des Fahrzeuges über die unten näher beschriebene Sprachfunktion abgerufen werden. Zusätzlich wird die IR-Kommunikationsstrecke dazu verwendet, zuvor im Fahrzeugschlüssel abgelegte benutzerspezifische Daten für die Einstellung von fahrzeugseiten Stellelementen bei Fahrtantritt an das Fahrzeug zu übertragen, wonach mittels der Fahrzeugelektronik die entsprechenden Elemente selbsttätig in die für den betreffenden Benutzer gewünschten Positionen gebracht werden. Damit kann beispielsweise die Einstellung des Fahrersitzes, von Spiegeln sowie eines Autoradios selbsttätig benutzerangepaßt erfolgen. Dabei kann vorgesehen sein, jeweils die Einstellungen am Ende einer Fahrt als aktuelle Einstellungen für den betreffenden Benutzer fahrzeugseitig zu erfassen und über die IR-Datenübertragungsstrecke in den Schlüssel einzuspeichern.

Zur Erfüllung der Sprachsystemfunktion besitzt der Schlüssel einen herkömmlichen Sprachspeicherbaustein (2) mit einer Speichereinheit (25) und einer Kontrolleinheit (26) zur Bauelementund Leistungsversorgungssteuerung, die mit dem Mikrokontroller (12) über eine Datenaustauschleitung (27) verbunden ist und die Speichereinheit (25) steuert. Ausgangsseitig ist an den Sprachspeicherbaustein (2) über eine entsprechende Verbindungsleitung (29) ein Lautsprecher (28) als Sprach- und Signaltonausgabeeinheit angeschlossen. Eine Bedien- und Spracheingabeeinheit (30) dient zur Aktivierung der Sprachsystemfunktion und zur Spracheingabe. Zu diesem Zweck beinhaltet sie einen Spracheingabeschalter (31), einen Sprachausgabeschalter (33) und eine Leuchtdiodenanzeige (32), wobei diese Elemente (31, 32, 33) über eine Signalleitungsverbindung (35) an den Mikrocontroller (12) angeschlossen sind, sowie ein Mikrophon (34), das über eine Übertragungsleitung (36) mit der Eingangsseite des Sprachspeicherbausteins (2) verbunden ist. Die Speichereinheit (25) des Sprachspeicherbausteins (2) ist so organisiert, daß in ihm Sprachnotizen von bis zu etwa 60s Dauer, die über das Mikrophon (34) nach Betätigen der Spracheingabetaste (31) eingegeben wurden, abgelegt werden können. Die gespeicherten Sprachnotizen können dann durch Betätigen der Sprachausgabetaste (33) gesteuert vom Mikrocontroller (12) und der Kontrolleinheit (26) des Sprachspeicherbausteins (2) aus der Speichereinheit (25) ausgelesen und am Lautsprecher (28) ausgegeben werden. Neben der Verwendungsmöglichkeit als Kurzspeicher für Termine, Adressen, Einkaufslisten etc. ist insbesondere die Möglichkeit hervorzuheben, beim Verlassen des Fahrzeugs eine Ortsbeschreibung über den aktuellen Standort des Fahrzeugs als Sprachnotiz speichern zu können. Dies kann für das spätere Wiederauffinden des Fahrzeugs besonders auf sehr großen Parkplätzen äußerst hilfreich sein. Bei weiter gedrückter Sprachausgabetaste (33) wird die Sprachnotiz wiederholt ausgegeben. Die Schlüsselelektronik ist des weiteren so ausgelegt, daß durch die Sprachsystemfunktion auch die dem Schlüssel über die IR-Kommunikationsstrecke zugeführten fahrzeugspezifischen Daten, wie Tankfüllstand und Kilometerstand, in Sprachform über den Lautsprecher (28) ausgegeben werden können. Zu diesem Zweck enthält die Speichereinheit (25) des Sprachspeicherbausteins (2) individuell adressierbare Speicherzellen für die Sprachausgabe der Ziffern 0 bis 9 in einem nicht überschreibbaren Speicherbereich. Der Mikrocontroller (12) tastet die von ihm aufgenommenen Daten Ziffer für Ziffer ab und steuert über die Verbindungsleitung (27) und die Kontrolleinheit (26) jeweils die entsprechende Speicherstelle der Speichereinheit (25) im Sprachspeicherbaustein (2) an, um die Daten über den Lautsprecher (28) auszugeben. Bei Bedarf können für diese Sprachausgabe weitere Sprachmeldungen in Form von Worten im Sprachspeicherbaustein abrufbar abgelegt sein.

Als weitere Kommunikationsfunktion ist der Schlüssel zum Empfang von Funkrufnachrichten eingerichtet, wozu er eine Funkrufempfangsantenne (37) und eine daran über eine Übertragungsleitung (38) angeschlossene Decoder- und Empfängereinheit (39) mit einem Funkrufempfängerteil (40), einem Funkrufdecoderteil (41) und einem EEPROM (42) aufweist. Funkrufe werden bekanntermaßen über allgemeine Telekommunikationskanäle mit Endgeräten wie Telefon, Bildschirmtext, Telex oder Teletex in Form von Nur-Ton-Nachrichten, Numerik-Nachrichten oder alphanumerischen Nachrichten abgesetzt, um eine Person zu erreichen, die zwar den zur gewählten Funkrufnummer gehörigen Funkrufempfänger bei sich trägt, jedoch momentan nicht über ein Endgerät des normalen Telekommunikationskanals angesprochen werden kann. Derartige Funkrufsysteme sind beispielsweise unter den Bezeichnungen Scall, Cityruf und Euromessage in Gebrauch. Geeignete Funkrufempfängerbauteile können inzwischen in derart miniaturisierter Form hergestellt werden, daß sie ohne weiteres in einem Fahrzeugschlüsselgehäuse üblicher Größe untergebracht werden können. Der Funkrufempfängerteil und der Funkrufdecoderteil stehen untereinander in Datenaustauschverbindung (43), wobei der Empfängerteil (40) die Signale der Funkrufantenne (37) empfängt und der Decoderteil (41) über die Datenaustauschleitung (27) mit dem Mikrocontroller (12) und dem Sprachspeicherbaustein (2) in Verbindung steht. Der Funkrufdecoderteil (41) prüft, ob das in einer empfangenen und direkt in einen seriellen digitalen Datenstrom gewandelten Funkrufinformation enthaltene Adress-Codewort mit dem in ihm abgelegten Codewort übereinstimmt, wonach die im Datenstrom folgende Nachricht übernommen und gegebenenfalls im EEPROM (42) zwischengespeichert wird. Über eine geeignete Schnittstelle können diese gültigen Nachrichten dann weitergegeben und weiterverarbeitet werden.

Beispielsweise kann eine Funkrufinformation vom Decoderteil (41) an den Mikrocontroller (12) abgegeben und von diesem über den Sender (18) der IR-Kommunikationsstrecke an das Fahrzeug gesendet werden, wo sie aufbereitet und z.B. auf einem fahrzeugweiten CAN-Bus verfügbar gemacht werden kann. Wenn das Fahrzeug zudem über ein als CAN-fähiger Funktionsknoten ausgebildetes Kombi-Instrument verfügt, kann dort über eine geeignete Anzeigeeinrichtung, z.B. ein Flüssigkristalldisplay, angezeigt werden, daß eine neue Funkrufnachricht empfangen wurde und eventuell auch deren Inhalt, z.B. eine Rückrufnummer. Außerdem verfügt der Schlüssel über die Möglichkeit, den Empfang einer Funkrufnachricht als einfachen Signalton über den Lautsprecher (28) zu signalisieren. Enthält die Funkrufnachricht eine Rückrufnummer, so kann diese in Sprachform ausgegeben werden, wozu die Speichereinheit (25) des Sprachspeicherbausteins (2) in dem nicht überschreibbaren Speicherbereich neben denjenigen für die Sprachausgabe der Ziffern 0 bis 9 zusätzlich individuell adressierbare Speicherzellen für die Sprachmeldungen "Rückruf" sowie "Ende" enthält. Der Benutzer kann sich somit die Rückrufnummer entweder an der Anzeige des Fahrzeugs, wenn er hierzu den Schlüssel ins Zündschloß gesteckt hat, oder akustisch über die Sprachsystemfunktion des Schlüssels ansagen lassen. Der Mikrocontroller (12) tastet dabei die Funkrufnachricht Ziffer für Ziffer ab und steuert die entsprechende Speicherstelle der Speichereinheit (25) im Sprachspeicherbaustein (2) an.

In den Fig. 4 und 5 sind zwei weitere Anwendungsmöglichkeiten der zusätzlichen Funkrufempfangsfunktion des Schlüssels (1) illustriert, die einen erhöhten Diebstahlschutz realisieren. Fig. 4 zeigt den Fall eines mit einer Einbruch-Diebstahl-Warnanlage ausgerüsteten Fahrzeugs (50), wobei die Warnanlage eine Infrarot-Innenraumüberwachung (51) und eine durch die abgewinkelten Doppelpfeile angedeutete front- und heckseitige Abschleppüberwachung (52) beinhaltet. Das Fahrzeug (50) verfügt außerdem über ein Funktelefon (53). Sobald die Einbruch-Diebstahl-Warnanlage aktiviert wird, wird von der Fahrzeugelektronik automatisch eine diesbezügliche Funkrufnachricht (54) über das Funktelefon (53) generiert und über die Autoantenne abgestrahlt. Diese Funkrufnachricht (54) wird vom Funkrufempfänger des elektronischen Schlüssels (1) empfangen, woraufhin dieser über den Lautsprecher (28) einen charakteristischen akustischen Alarm abgibt. Der Schlüsselbesitzer, der sich häufig nicht in der Nähe des Fahrzeugs aufhält, wo die aktivierte Einbruch-Diebstahl-Warnanlage einen Alarm erzeugt, wird auf diese Weise von der Aktivierung der Warnanlage informiert und kann geeignete Maßnahmen ergreifen.

Das in Fig. 5 gezeigte System bietet einen erhöhten Fremdnutzungsschutz. Der Schlüssel (1) kommuniziert hierbei über eine nicht gezeigte, bidirektionale IR-Datenübertragungsstrecke mit einer Wegfahrsperreinrichtung, die in einem zugehörigen Fahrzeug (60) eingebaut ist. Im normalen Betrieb sendet der Schlüssel (1) in vorgegebenen Zeitabständen jeweils ein Nutzungsfreigabecodesignal zum Fahrzeug, welches eine Aktivierung der Wegfahrsperre verhindert und damit das Fahrzeug (60) fahrbereit hält. Zur unberechtigten Fremdnutzung des Fahrzeugs (60) ist daher auch zwingend der Besitz des Schlüssels (1) erforderlich. Als weitere Sicherheitsmaßnahme ist die Schlüsselelektronik so ausgelegt, daß das Senden des IR-Freigabecodesignals gesperrt wird, wenn ein in vorgegebenen zeitlichen Abständen zu sendender Funkruf (61) nicht mehr im Schlüssel (1) empfangen wird. Die regelmäßige Absendung solcher, den Schlüssel (1) bezüglich des Sendes des IR-Freigabecodesignals aktiv haltender Funkrufe (61) erfolgt über eine hierzu vom Benutzer autorisierte Telekommunikations-Zentralstelle (62), die über eine zugehörige Standleitung (63) mit einem Funkrufsender (64) verbunden ist. Diese Maßnahme verhindert, daß ein Unberechtigter über ein Telekommunikations-Endgerät durch Anwahl aller theoretisch möglichen Funkrufnummern auch diejenige zur Sperrung eines bestimmten Fahrzeugschlüssels erreichen kann. Wenn nun der Fahrzeugbesitzer den Verlust seines Fahrzeugschlüssels (1) bemerkt, so kann er diese Funktion dadurch sperren, daß er dies der Zentralstelle (62), z.B. über ein Telefon (65) und ein zugehöriges analoges oder ISDN-Telefonnetz, (66) meldet, woraufhin die Zentralstelle (62) das Absetzen der Funkrufe für den Schlüssel (1) abbricht. Dies beendet das Senden von IR-Freigabecodesignalen des Schlüssels (1) für das zugehörige Fahrzeug (60), so daß bei einem Versuch, das Fahrzeug (60) anschließend mit dem Schlüssel (1) zu benutzen, die Wegfahrsperre aktiviert wird. Dies setzt fahrbetriebswichtige Fahrzeugsteuergeräte, z.B. ein Motorsteuergerät, außer Betrieb und verhindert die unberechtigte Fahrzeugnutzung. Bei Verwendung von ISDN-fähigen Endgeräten besteht für die Zentralstelle (62) die Möglichkeit zur Authentikation des Anrufers. Durch Erteilung entsprechender Berechtigungen, z.B. durch eines solche ISDN-Authentikation oder durch ein persönliches Codewort, ist eine mißbräuchliche Aktivierung der Wegfahrsperre sehr unwahrscheinlich.

Alternativ zum periodischen Senden von nutzungsberechtigenden Funkrufen kann vorgesehen sein, daß der Fahrzeugschlüssel (1) das Senden der IR-Freigabecodesignale an das Fahrzeug (60) ohne Empfang von Funkrufen (61) aufrechterhält und dann beendet, wenn ein Funkruf empfangen wird, der eine Fahrzeugnutzungssperrinformation enthält. In diesem Fall sendet die Zentralstelle (62) die entsprechende Funkrufnachricht, nachdem sie vom Fahrzeugbesitzer aufgrund eines Schlüsselverlustes hierzu beauftragt worden ist.

Zusätzlich ist bei dem System von Fig. 5 vorgesehen, daß bei Aktivierung einer im Fahrzeug (60) vorhandenen Einbruch-Diebstahl-Warnanlage analog zum Fall von Fig. 4 selbsttätig über ein vorhandenes Autotelefon eine Funkrufnummer gewählt und über ein Funktelefonnetz (67) zur autorisierten Zentralstelle (62) gemeldet wird, die dann diesen Anruf an den Fahrzeugbesitzer weiterleitet und/oder durch Unterbrechen nutzungsberechtigender Funkrufe bzw. Senden eines nutzungssperrenden Funkrufs an den Schlüssel (1) die weitere Nutzung des Fahrzeugs (60) mit dem Schlüssel (1) verhindert.

## Patentansprüche

1. Elektronischer Fahrzeugschlüssel,
**gekennzeichnet durch**
■ eine Funkrufempfangseinrichtung (37, 38, 39),
■ eine Einheit (18, 28) zur Ausgabe empfangener Funkrufinformationen und
■ eine Steuereinheit (12) zur Steuerung der Funkrufempfangseinrichtung und der Funkrufinformationsausgabeeinheit.

2. Elektronischer Fahrzeugschlüssel nach Anspruch 1,
**dadurch gekennzeichnet,**
**dass** der Empfang einer Funkrufnachricht durch einen akustischen Signalton angezeigt wird und/oder eine in einer empfangenen Funkrufnachricht enthaltene Rückrufnummer über eine Sprachausgabeeinheit (28) gesteuert von der Steuereinheit (12) in Sprachform ausgebbar ist.

3. Elektronischer Fahrzeugschlüssel nach Anspruch 2,
**gekennzeichnet durch**
einen Sender (19) als Teil eines drahtlosen Datenkommunikationssystems zwischen Schlüssel und zugehörigem Fahrzeug, wobei über den Sender Informationen, die in empfangenen Funkrufnachrichten enthalten sind, zum Fahrzeug übermittelbar sind.

4. Elektronischer Fahrzeugschlüssel nach Anspruch 3 für ein mit einer Wegfahrsperre ausgerüstetes Fahrzeug,
**dadurch gekennzeichnet, dass**
■ in vorgegebenen Zeitabständen Nutzungsfreigabedaten, welche die Wegfahrsperre deaktiviert halten, über das drahtlose Datenkommunikationssystem vom Schlüssel gesendet werden und
■ das Senden der Nutzungsfreigabedaten an den periodischen Empfang von nutzungsfreigebenden Funkrufnachrichten (61) gekoppelt ist, bei deren Ausbleiben das Senden der Nutzungsfreigabedaten abgebrochen wird.

5. Elektronischer Fahrzeugschlüssel nach einem der Ansprüche 1 bis 4 für ein Fahrzeug mit einer Einbruch-Diebstahl-Warnanlage,
**dadurch gekennzeichnet, dass**
er zum Empfang einer von einem Funktelefon (53) des Fahrzeugs (50) bei Aktivierung der Einbruch-Diebstahl-Warnanlage selbsttätig gesendeten Funkrufnachricht (54), die eine Information über die Aktivierung der Einbruch-Diebstahl-Warnanlage enthält, eingerichtet ist und auf Empfang einer solchen Funkrufnachricht hin eine Warnmeldung abgibt.

## Claims

1. An electronic vehicle key,
**characterised by**
■ a radio call receiving device (3 7, 3 8, 39),
■ a unit (18, 28) for outputting received radio call information and
■ a control unit (12) for controlling the radio call receiving device and the radio call information output device.

2. An electronic vehicle key in accordance with claim 1,
**characterised in that**
the reception of a radio call message is indicated by an acoustic signal tone and/or a call back number contained in a received radio call message can be output by the control unit (12) in a controlled manner in speech form via a speech output unit (28).

3. An electronic vehicle key in accordance with claim 2,
**characterised by**
a transmitter (19) forming part of a wireless data communication system between the key and the corresponding vehicle, it being possible to send information contained in received radio call messages to the vehicle via the transmitter.

4. An electronic vehicle key in accordance with claim 3 for a vehicle fitted with an immobiliser,
**characterised in that**
■ use release data which keeps the immobiliser deactivated is sent by the key via the wireless data communication system at predetermined intervals and
■ the transmission of the use release data is linked to the periodic reception of use-releasing radio call messages (61) which if not received cause the transmission of the use release data to be stopped.

5. An electronic vehicle key in accordance with one of claims 1 to 4 for a vehicle with an alarm system,
**characterised in that**
it is set up to receive a radio call message (54) containing data on the activation of the alarm system sent automatically by a radio telephone (53) in the vehicle (50) on activation of the alarm system and emits an alarm message on reception of a radio telephone message of this type.

## Revendications

1. Clé électronique pour véhicule, **caractérisée par**
- un dispositif de réception d'appels radio (37, 38, 39),
- une unité (18, 28) pour la diffusion d'informations d'appels radio reçues et
- une unité de commande (12) pour la commande du dispositif de réception d'appels radio et de l'unité de diffusion d'informations reçues par des appels radio.

2. Clé électronique pour véhicule selon la revendication 1, **caractérisée en ce que** la réception d'un message d'appel radio est indiquée par une tonalité acoustique de signalisation et/ou **en ce qu'**un numéro de rappel contenu dans un message d'appel radio reçu peut être diffusé sous une forme vocale par l'intermédiaire d'une unité de diffusion vocale (28) commandée par l'unité de commande (12).

3. Clé électronique pour véhicule selon la revendication 2, **caractérisée par** un émetteur (19) en tant que partie d'un système de communication de données sans fil entre la clé et le véhicule correspondant, dans lequel des informations, qui sont contenues dans des messages d'appels radio reçus, peuvent être transmises par l'intermédiaire de l'émetteur vers le véhicule.

4. Clé électronique pour véhicule selon la revendication 3 pour un véhicule équipé d'un système anti-démarrage, **caractérisée**
- **en ce que** des données d'autorisation pour l'utilisation, qui maintiennent le système anti-démarrage en état de désactivation, sont émises par la clé à des intervalles prédéterminés par l'intermédiaire du système de communication de données sans fil et
**en ce que** l'émission des données d'autorisation pour l'utilisation est couplée avec la réception périodique de messages d'appels radio assurant d'autorisation pour l'utilisation (61), l'émission des données d'autorisation pour l'utilisation étant interrompue en cas d'absence de ces messages.

5. Clé électronique pour véhicule selon l'une quelconque des revendications 1 à 4 pour un véhicule équipé d'une installation d'alarme en cas d'effraction et de vol, **caractérisée en ce qu'**elle est agencée pour la réception d'un message d'appel radio (54), qui contient une information concernant l'activation de l'installation d'alarme en cas d'effraction et de vol et qui est émis automatiquement par un radiotéléphone (53) du véhicule (50) lorsque l'installation d'alarme en cas d'effraction et de vol est activée et **en ce qu'**elle émet un message d'avertissement après la réception d'un tel message d'appel radio.
